# EUROPEAN PATENT APPLICATION

(11) **EP 3 855 305 A1**
(43) Date of publication of application: **28.07.2021**
(21) Application number: 20210274.5
(22) Date of filing: 27.11.2020
(51) Int. Cl.: G06F 3/16

(54) **AGENT SYSTEM, AGENT SERVER, AND AGENT PROGRAM**

(30) Priority: 23.01.2020 JP 2020009344
(71) Applicant: TOYOTA JIDOSHA KABUSHIKI KAISHA, Toyota-shi, Aichi-ken, 471-8571 (JP)
(72) Inventor: TAKESHITA, Kohki, Aichi-ken, 471-8571 (JP)
(74) Representative: J A Kemp LLP

(57) **Abstract**

An agent system includes: a terminal device including a first processor including hardware, the first processor being configured to transfer user's uttered voice to a server configured to actualize a function of one voice interaction agent out of a plurality of the voice interaction agents; and a server including a second processor including hardware, the second processor being configured to recognize the user's uttered voice transferred from the terminal device, and determine to which voice interaction agent out of the plurality of voice interaction agents an instruction included in the user's uttered voice is directed.

## Description

### BACKGROUND

The present disclosure relates to an agent system, an agent server, and an agent program.

JP 2018-189984 A discloses a voice interaction method for using services of a plurality of voice interaction agents having different functions. In this voice interaction method, which voice interaction agent is to execute the process based on the input voice signal is determined, on the basis of the result of the voice recognition process and agent information.

### SUMMARY

There is a need for an agent system, an agent server, and an agent program which are capable of accurately calling a voice interaction agent having a function desired by a user when services of a plurality of voice interaction agents are available.

According to one aspect of the present disclosure, there is provided an agent system including: a terminal device including a first processor including hardware, the first processor being configured to transfer user's uttered voice to a server configured to actualize a function of one voice interaction agent out of a plurality of the voice interaction agents; and the server including a second processor including hardware, the second processor being configured to recognize the user's uttered voice transferred from the terminal device, and determine to which voice interaction agent out of the plurality of voice interaction agents an instruction included in the user's uttered voice is directed.

### BRIEF DESCRIPTION OF THE DRAWINGS

FIG. 1 is a diagram schematically illustrating an agent system, a terminal device, and an agent server according to first and second embodiments;
FIG. 2 is a block diagram schematically illustrating configurations of the agent system and the terminal device according to the first embodiment;
FIG. 3 is a flowchart illustrating an example of a processing procedure of a voice interaction method executed by the agent system, the terminal device, and the agent program according to the first embodiment;
FIG. 4 is a block diagram schematically illustrating configurations of the agent system and the agent server according to the second embodiment;
FIG. 5 is a flowchart illustrating an example of a processing procedure of a voice interaction method executed by the agent system, the agent server, and the agent program according to the second embodiment; and
FIG. 6 is a flowchart illustrating an example of a processing procedure of a voice interaction method executed by the agent system, the agent server, and the agent program according to the second embodiment.

### DETAILED DESCRIPTION

An agent system, a terminal device, an agent server, and an agent program according to the embodiments will be described with reference to the drawings. Note that the constituent elements in the following embodiments include those that may be easily replaced by those skilled in the art, or those that are substantially the same.

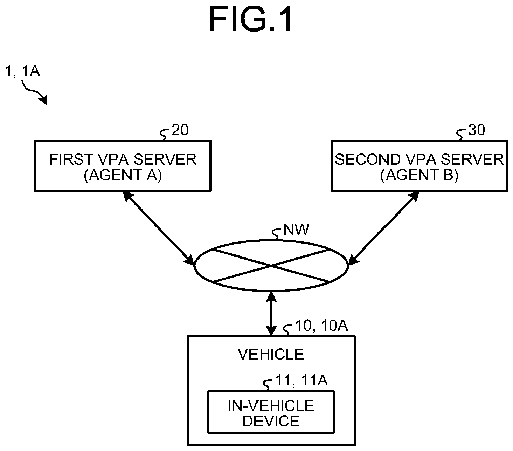

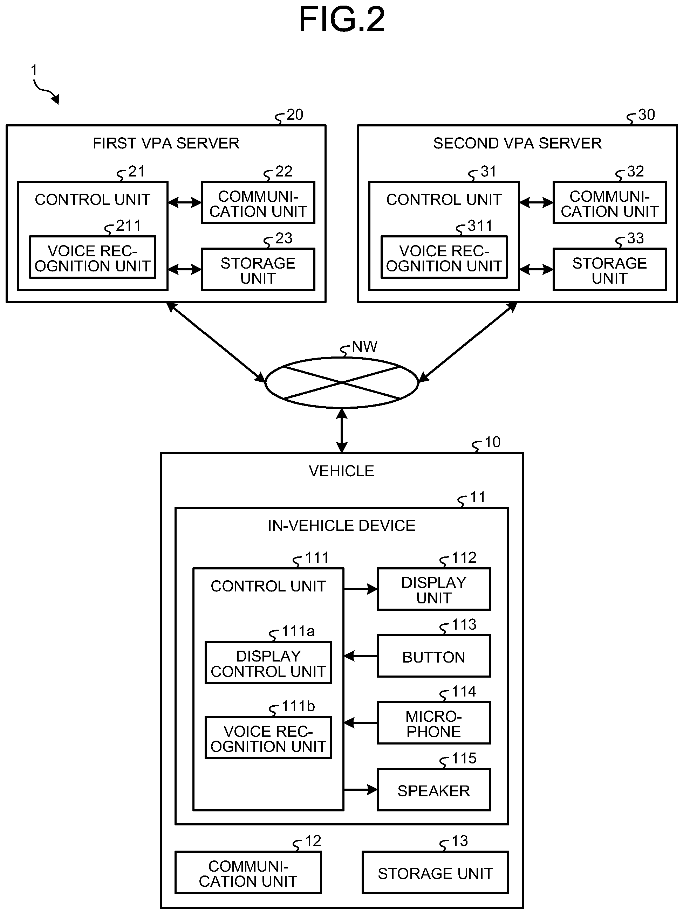

Configurations of the agent system and the terminal device according to a first embodiment will be described with reference to FIGS. 1 and 2. The agent system, the terminal device, and the agent program according to the first embodiment are intended to provide services of a plurality of voice interaction agents (hereinafter, referred to as "agent") to a user.

Here, a "user" is a person who uses services of a plurality of agents through a terminal device. The terminal device in the present disclosure is assumed to be an in-vehicle device mounted on a vehicle. Therefore, an example of the user is an occupant including a driver of a vehicle. The terminal device is not limited to the in-vehicle device mounted on a vehicle, and may be an information terminal device carried by the user, for example. Examples of the information terminal device include a mobile phone, a tablet terminal, a wearable computer, and a personal computer.

As illustrated in FIG. 1, an agent system 1 includes: a vehicle 10 equipped with an in-vehicle device 11; a first Virtual Personal Assistant (VPA) server 20; and a second VPA server 30. The terminal device according to the present disclosure is specifically actualized by the in-vehicle device 11. The vehicle 10, the first VPA server 20, and the second VPA server 30 are communicable with each other through a network NW. The network NW is composed of, for example, an internet line network, a mobile phone line network, or the like.

Although the agent system 1 in the first embodiment uses two VPA servers, the number of VPA servers may be three or more. In the first embodiment, the first VPA server 20 is a server device for actualizing the function of an agent A, while the second VPA server 30 is a server device for actualizing the function of an agent B. The agents A and B may provide the same type of service (music streaming service, for example) or may provide different types of service (music streaming service provided by agent A and weather information service provided by agent B, for example). In the present disclosure, the agents A and B are collectively referred to as "agent", and the first VPA server 20 and the second VPA server 30 are collectively referred to as "VPA server" or "agent server".

As illustrated in FIG. 2, the vehicle 10 includes an in-vehicle device 11, a communication unit 12, and a storage unit 13. The in-vehicle device 11 is a car navigator mounted on the vehicle 10, for example. The in-vehicle device 11 includes a control unit 111, a display unit (display) 112, a button 113, a microphone 114, and a speaker 115.

The control unit 111 is specifically equipped with: a processor including a Central Processing Unit (CPU), a Digital Signal Processor (DSP), a Field-Programmable Gate Array (FPGA); and memory (main storage unit) including Random Access Memory (RAM) and Read Only Memory (ROM).

The control unit 111 loads the program stored in the storage unit 13 into the work area of the main storage unit and executes the program. Through execution of the program, the control unit 111 controls individual components, thereby actualizing a function that matches a predetermined purpose. The control unit 111 functions as a display control unit 111a and a voice recognition unit 111b through the execution of the programs stored in the storage unit 13.

The display control unit 111a controls the display content of the display unit 112. Based on user's operation, the display control unit 111a causes the display unit 112 to display a screen corresponding to the user's operation. The display control unit 111a also causes the display unit 112 to display predetermined information input from the first VPA server 20 and the second VPA server 30. Examples of the "predetermined information" include a recognition result of the user's uttered voice and response data regarding the process based on user's instruction.

Here, an example of the "process based on user's instruction" refers to a process that is performed when a user instructs the agent (VPA server) to "play music". This process is performed by the VPA server and includes a process of acquiring music streaming data from a server that provides music streaming services (hereinafter referred to as a "service server") and transmitting the acquired data to the in-vehicle device 11. In addition, "response data" transmitted from the VPA server to the in-vehicle device 11 at that time is music streaming data.

The display control unit 111a may control the display unit 112 to display the name of an agent that has been determined when the voice recognition unit 111b has determined to which agent out of the plurality of agents A and B the instruction included in the user's uttered voice is directed. This makes it possible to confirm to which agent the user has given an instruction. Furthermore, even when an instruction is given to an agent different from the user's intention, it is possible to take a measure such as correcting the instruction, leading to improvement of convenience.

The voice recognition unit 111b is a voice recognition engine that performs automatic speech recognition (ASR) processing and natural language understanding (NLU).

The voice recognition unit 111b recognizes user's uttered voice input from the microphone 114, and determines to which agent out of the plurality of agents A and B the instruction included in the user's uttered voice is directed. Next, the voice recognition unit 111b transfers the user's uttered voice to the agent server (first VPA server 20 or second VPA server 30) that actualizes the determined agent function. Next, the voice recognition unit 111b acquires predetermined information (voice recognition result, response data) from the agent server.

Specifically, the voice recognition unit 111b converts the user's uttered voice into text data. When the text data includes a phrase specifying an agent, the voice recognition unit 111b determines that the uttered voice includes an instruction directed to the agent. Here, the "phrase specifying the agent" indicates a wake-up phrase (WuP) for calling the agent. The wake-up phrase is also referred to as a "wake word".

The voice recognition unit 111b may output the result of the voice recognition process to the agent server (first VPA server 20 or second VPA server 30) as it is. In this case, the voice recognition unit 111b outputs the recognition result of the user's uttered voice to the agent server, instead of the user's uttered voice. Next, the voice recognition unit 111b acquires predetermined information (response data or the like) from the agent server. This enables omission of the voice recognition process in the agent server, leading to improvement of the response speed of the agent server.

The display unit 112 includes a liquid crystal display (LCD), an organic EL display (OLED), or the like, and displays information under the control of the display control unit 111a. The button 113 is a button pressed by the user at utterance. The button 113 is formed with a push-type physical press-button provided on a steering wheel of the vehicle 10 or a virtual press button displayed on the display unit 112.

Here, the agent in the present disclosure has a plurality of calling methods (starting methods). For example, when instructing the agent B (second VPA server 30) to provide weather information, the user makes an utterance as in the following Methods (1) and (2).
(1) Utterance: "Agent B, tell me the weather today"
(2) Utterance: "Tell me the weather today" while pressing the button 113.
   Method (1) is a method using a wake-up phrase, in which the user utters a phrase including a phrase specifying the agent B and a phrase as an instruction to the agent B.
   Method (2) is a method in which the button 113 is used instead of the wake-up phrase. Note that "utter while pressing the button 113" includes two patterns: making utterance after pressing/releasing the button 113 (Push-to-Talk/Tap-to-Talk); and making utterance while pressing button 113 and then releasing the button 113 after completion of the utterance (Hold-to-Talk). In this manner, by pressing the button 113 and then uttering, the wake-up phrase may be omitted.
      Furthermore, when using an agent, a specific agent may be used as a medium and another agent may be called via the specific agent. For example, when instructing the agent B (second VPA server 30) to provide weather information via the agent A (first VPA server 20), the user makes an utterance as in the following (3).
(3) Utterance: "Agent A, Agent B, tell me the weather today"

Here, in the case of (3), the user's uttered voice includes wake-up phrases for a plurality of agents. Therefore, as compared with (1) and (2), an agent not intended by the user will be more likely to be called. Therefore, in the agent system 1, the terminal device, and the agent program according to the first embodiment, the in-vehicle device 11 side determines to which agent the user's instruction is directed and transfers the user's uttered voice to the VPA server based on a result of the determination.

The microphone 114 is an input unit that receives user's voice input. The microphone 114 is used when the user gives an instruction to the agent (VPA server), for example. The speaker 115 is an output unit that outputs sound to the user. The speaker 115 is used when the agent responds to the user based on the user's instruction, for example.

The communication unit 12 includes a Data Communication Module (DCM), for example, and communicates with the first VPA server 20 and the second VPA server 30 by wireless communication via the network NW.

The storage unit 13 includes a recording medium such as Erasable Programmable ROM (EPROM), a hard disk drive (HDD), and a removable medium. Examples of the removable medium include disc recording media such as a Universal Serial Bus (USB) flash drive, a Compact Disc (CD), a Digital Versatile Disc (DVD), and a Blu-ray (BD; registered trademark). Furthermore, the storage unit 13 may store an operating system (OS), various programs, various tables, various databases, or the like. The storage unit 13 stores, for example, data of the content of the user's dialog and data of the recognition result of the user's uttered voice, as necessary.

The first VPA server 20 includes a control unit 21, a communication unit 22, and a storage unit 23. The physical configurations of the communication unit 22 and the storage unit 23 are similar to those of the communication unit 12 and the storage unit 13, respectively.

The control unit 21 is specifically equipped with: a processor including a Central Processing Unit (CPU), a Digital Signal Processor (DSP), a Field-Programmable Gate Array (FPGA); and memory (main storage unit) including Random Access Memory (RAM) and Read Only Memory (ROM). The control unit 21 actualizes the function of the voice interaction agent through execution of the program of the voice interaction agent stored in the storage unit 23. The control unit 21 also functions as a voice recognition unit 211 through the execution of the programs stored in the storage unit 23.

The voice recognition unit 211 has a function similar to that of the voice recognition unit 111b, recognizes user's uttered voice transferred from the in-vehicle device 11, and outputs predetermined information (voice recognition result, response data) to the in-vehicle device 11.

The voice recognition unit 211 may store the content of the interaction with the user in the storage unit 23 as user's preference information, and may perform processing in consideration of the user's preference information when performing the processing based on the recognition result of the user's uttered voice transferred from the in-vehicle device 11. For example, when the user frequently instructs the agent A to play music of a specific genre (for example, classical music), the voice recognition unit 211 stores information "user's favorite music genre: classical music" as preference information, in the storage unit 23. Subsequently, when the user instructs the agent A to "play music", the voice recognition unit 211 acquires classical music streaming data from the service server and transmits the data to the in-vehicle device 11. This makes it possible to receive a service that fits the user's preference, which improves convenience.

The storage unit 23 stores a program of the voice interaction agent actualized by the first VPA server 20. The storage unit 23 further stores, for example, data of the content of the user's dialog and data of the recognition result of the user's uttered voice, as necessary. Note that these pieces of information may be deleted from the storage unit 23 after use from the viewpoint of privacy protection.

The second VPA server 30 includes a control unit 31, a communication unit 32, and a storage unit 33. The physical configurations of the control unit 31, the communication unit 32, and the storage unit 33 are similar to those of the control unit 21, the communication unit 12, and the storage unit 13, respectively. The control unit 31 actualizes the function of the voice interaction agent through execution of the program of the voice interaction agent stored in the storage unit 33. The control unit 31 also functions as a voice recognition unit 311 through the execution of the programs stored in the storage unit 33.

The voice recognition unit 311 has a function similar to that of the voice recognition unit 111b, recognizes user's uttered voice transferred from the in-vehicle device 11, and outputs predetermined information (voice recognition result, response data) to the in-vehicle device 11. Similarly to the voice recognition unit 211, the voice recognition unit 311 may store the content of the interaction with the user in the storage unit 33 as user's preference information, and may perform processing in consideration of the user's preference information when performing the processing based on the recognition result of the user's uttered voice transferred from the in-vehicle device 11. This makes it possible to receive a service that fits the user's preference, which improves convenience.

The storage unit 33 stores a program of the voice interaction agent actualized by the second VPA server 30. The storage unit 33 further stores, for example, data of the content of the user's dialog and data of the recognition result of the user's uttered voice, as necessary. Note that these pieces of information may be deleted from the storage unit 33 after use from the viewpoint of privacy protection.

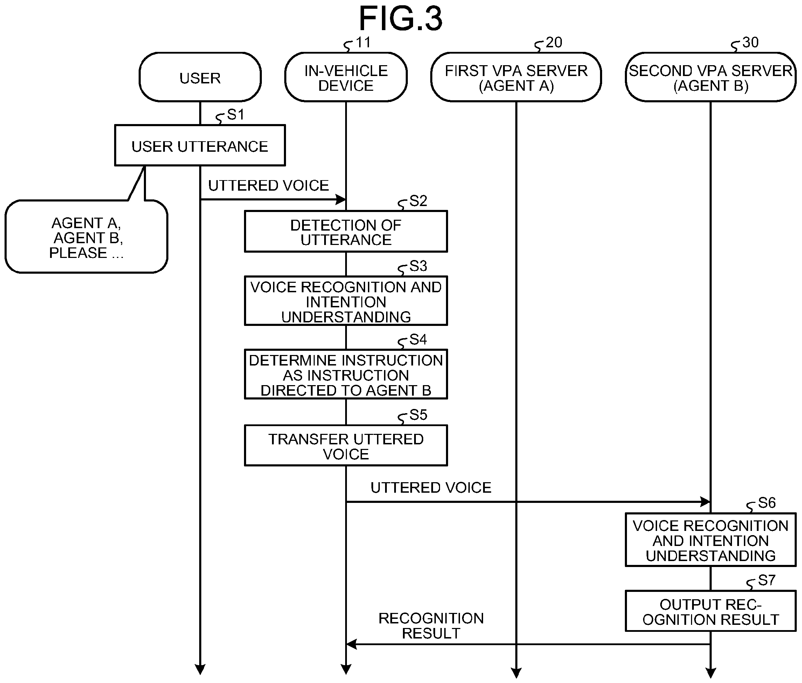

The processing procedure of the voice interaction method executed by the agent system 1 and the terminal device according to the first embodiment will be described with reference to FIG. 3. The following describes a voice interaction method when a user calls another agent via a specific agent. For the sake of convenience, FIG. 3 illustrates the steps regarding user utterance in the flowchart of the voice interaction method.

First, in response to the user's utterance "Agent A, Agent B, please ..." (step S1), data of the uttered voice is input to the in-vehicle device 11 through the microphone 114. Subsequently, the voice recognition unit 111b of the in-vehicle device 11 detects the user's utterance (step S2) and performs a voice recognition process and an intention understanding process (step S3).

The voice recognition unit 111b determines that the instruction is directed to the agent B (step S4), and transfers the user's uttered voice to the second VPA server 30 (step S5). Subsequently, the voice recognition unit 311 of the second VPA server 30 performs the voice recognition process and the intention understanding process (step S6), and outputs a result of the recognition to the in-vehicle device 11 (step S7).

When the user utters, in step S1, "Agent B, Agent A, please ...", the following process is performed. The voice recognition unit 111b detects user's utterance in step S2, and performs the voice recognition process and the intention understanding process in step S3. Subsequently, the voice recognition unit 111b determines that the instruction is directed to the agent A in step S4, and transfers the user's uttered voice to the first VPA server 20 in step S5. Subsequently, the voice recognition unit 211 of the first VPA server 20 performs the voice recognition process and the intention understanding process in step S6, and outputs the recognition result to the in-vehicle device 11 in step S7.

According to the above-described agent system 1, the terminal device, and the agent program of the first embodiment, the in-vehicle device 11 side determines to which agent the user's instruction is directed and transfers the user's uttered voice to the VPA server based on a result of the determination. This makes it possible to accurately call an agent having a function desired by a user when using services of a plurality of agents having different functions, enabling the user to receive desired services.

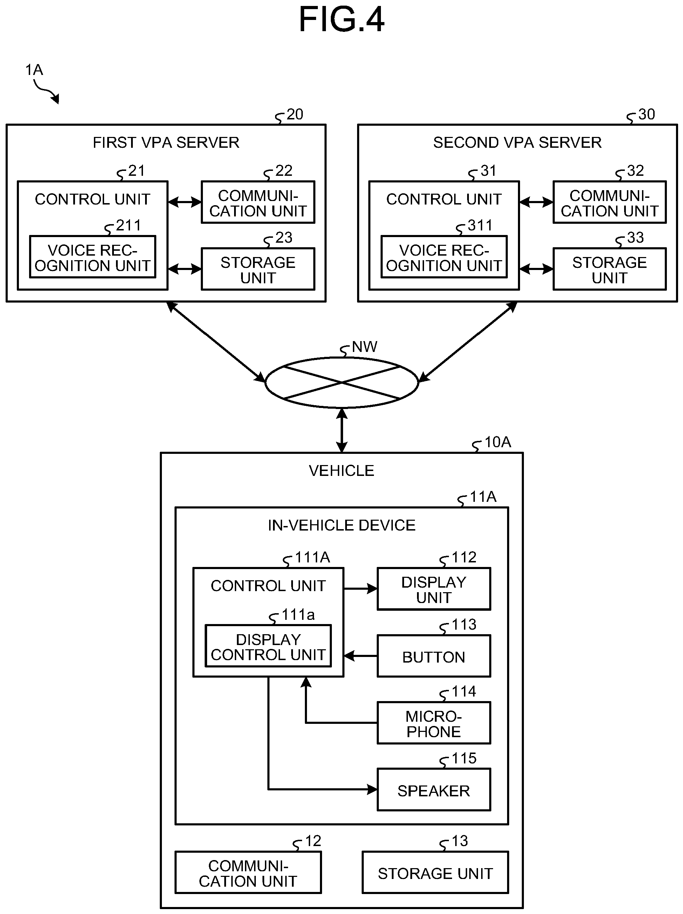

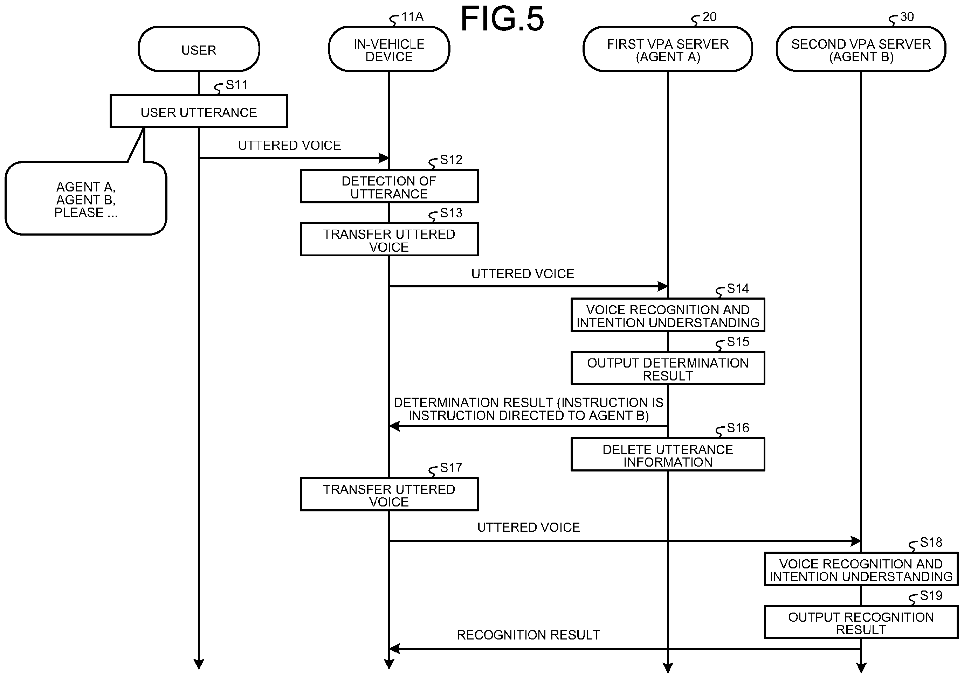

The configurations of the agent system and the agent server according to a second embodiment will be described with reference to FIGS. 4 and 5. The configuration of an agent system 1A according to the second embodiment is similar to the configuration of the agent system 1 except for the configuration of an in-vehicle device 11A of a vehicle 10A. Although the in-vehicle device 11 side determines to which agent the user's instruction is directed in the agent system 1 according to the first embodiment, the agent server (first VPA server 20 or second VPA server 30) determines to which agent the user's instruction is directed in the agent system 1A according to the second embodiment. The following will mainly describe the parts of the agent system 1A different from the agent system 1.

As illustrated in FIG. 4, the vehicle 10A includes an in-vehicle device 11A, a communication unit 12, and a storage unit 13. The in-vehicle device 11A includes a control unit 111A, a display unit (display) 112, a button 113, a microphone 114, and a speaker 115. The control unit 111A functions as a display control unit 111a through the execution of the programs stored in the storage unit 13.

The display control unit 111a may control the display unit 112 to display the name of an agent that has been determined when the voice recognition units 211 and 311 have determined to which agent out of the plurality of agents A and B the instruction included in the user's uttered voice is directed and a result of the determination is transferred. This makes it possible to confirm to which agent the user has given an instruction. Furthermore, even when an instruction is given to an agent different from the user's intention, it is possible to take a measure such as correcting the instruction, leading to improvement of convenience.

The voice recognition unit 211 of the first VPA server 20 recognizes the user's uttered voice transferred from the in-vehicle device 11A, and determines to which agent out of the plurality of agents A and B the instruction included in the user's uttered voice is directed. Subsequently, when the voice recognition unit 211 has determined that the instruction included in the user's uttered voice is an instruction directed to another agent B, the voice recognition unit 211 outputs a result of the determination to the in-vehicle device 11A.

In response to this, the control unit 111A of the in-vehicle device 11A transfers the user's uttered voice to the second VPA server 30 that actualizes the function of the determined agent B, and acquires predetermined information (voice recognition result, response data) from the second VPA server 30. In a case where the voice recognition unit 211 has determined that the instruction included in the user's uttered voice is an instruction directed to own agent (agent A), the voice recognition unit 211 outputs the predetermined information (voice recognition result, response data) to the in-vehicle device 11.

Furthermore, in a case where the voice recognition unit 211 has determined that the instruction included in the user's uttered voice is an instruction directed to another agent B, the voice recognition unit 211 may directly transfer the user's uttered voice to the second VPA server 30 that actualizes the function of the determined agent B, rather than output a result of the determination to the in-vehicle device 11A. This enables omission of the process of transferring the uttered voice in the in-vehicle device 11A, leading to improvement of the response speed of the entire agent system 1A.

The storage unit 23 stores, for example, data of the content of the user's dialog and data of the recognition result of the user's uttered voice, as necessary. Note that these pieces of information may be deleted from the storage unit 23 after use from the viewpoint of privacy protection. In this case, the voice recognition unit 211 first recognizes the user's uttered voice transferred from the in-vehicle device 11A, and thereafter deletes the user's uttered voice and a recognition result thereof stored in the storage unit 23.

The voice recognition unit 311 of the second VPA server 30 recognizes the user's uttered voice transferred from the in-vehicle device 11A, and determines to which agent out of the plurality of agents A and B the instruction included in the user's uttered voice is directed. Subsequently, when the voice recognition unit 311 has determined that the instruction included in the user's uttered voice is an instruction directed to another agent A, the voice recognition unit 311 outputs a result of the determination to the in-vehicle device 11A.

In response to this, the control unit 111A of the in-vehicle device 11A transfers the user's uttered voice to the first VPA server 20 that actualizes the function of the determined agent A, and acquires predetermined information (voice recognition result, response data) from the first VPA server 20. In a case where the voice recognition unit 311 has determined that the instruction included in the user's uttered voice is an instruction to own agent (agent B), the voice recognition unit 311 outputs the predetermined information (voice recognition result, response data) to the in-vehicle device 11.

Furthermore, in a case where the voice recognition unit 311 has determined that the instruction included in the user's uttered voice is an instruction directed to another agent A, the voice recognition unit 311 may directly transfer the user's uttered voice to the first VPA server 20 that actualizes the function of the determined agent A, rather than outputting a result of the determination to the in-vehicle device 11A. This enables omission of the process of transferring the uttered voice in the in-vehicle device 11A, leading to improvement of the response speed of the entire agent system 1A.

The storage unit 33 stores, for example, data of the content of the user's dialog and data of the recognition result of the user's uttered voice, as necessary. Note that these pieces of information may be deleted from the storage unit 33 after use from the viewpoint of privacy protection. In this case, the voice recognition unit 311 first recognizes the user's uttered voice transferred from the in-vehicle device 11A, and thereafter deletes the user's uttered voice and a result of this recognition stored in the storage unit 33.

A first aspect of the processing procedure of the voice interaction method executed by the agent system 1A and the agent server according to the second embodiment will be described with reference to FIG. 5. The following describes a voice interaction method when a user calls another agent via a specific agent. For the sake of convenience, FIG. 5 illustrates the steps regarding user utterance in the flowchart of the voice interaction method.

First, when the user utters "Agent A, Agent B, please ..." (step S11), data of the uttered voice is input to the in-vehicle device 11A through the microphone 114. Subsequently, the control unit 111A of the in-vehicle device 11A detects the user's utterance (step S12), and transfers the user's uttered voice to the first VPA server 20, for example (step S13). Subsequently, the voice recognition unit 211 of the first VPA server 20 performs a voice recognition process and an intention understanding process (step S14).

The voice recognition unit 211 determines that the instruction is directed to the agent B, and outputs a result of the determination to the in-vehicle device 11A (step S15). Subsequently, the voice recognition unit 211 deletes the utterance information including the utterance content of the user and the recognition result from the storage unit 23 (step S16).

Subsequently, the control unit 111A transfers the user's uttered voice to the second VPA server 30 (step S17). Subsequently, the voice recognition unit 311 of the second VPA server 30 performs the voice recognition process and the intention understanding process (step S18), and outputs a result of the recognition to the in-vehicle device 11A (step S19).

When the user utters, in step S11, "Agent B, Agent A, please ...", the following process is performed. The control unit 111A detects the user's utterance in step S12, and transfers, in step S13, the user's uttered voice to the second VPA server 30, for example. Subsequently, the voice recognition unit 311 performs the voice recognition process and the intention understanding process in step S14. Subsequently, the voice recognition unit 311 determines in step S15 that the instruction is directed to the agent A, and outputs a result of the determination to the in-vehicle device 11A. Subsequently, the voice recognition unit 311 deletes the utterance information including the utterance content of the user and the recognition result from the storage unit 33 in step S16. Subsequently, the control unit 111A transfers the user's uttered voice to the first VPA server 20 in step S17. Subsequently, the voice recognition unit 211 performs the voice recognition process and the intention understanding process in step S18, and outputs the recognition result to the in-vehicle device 11A in step S19.

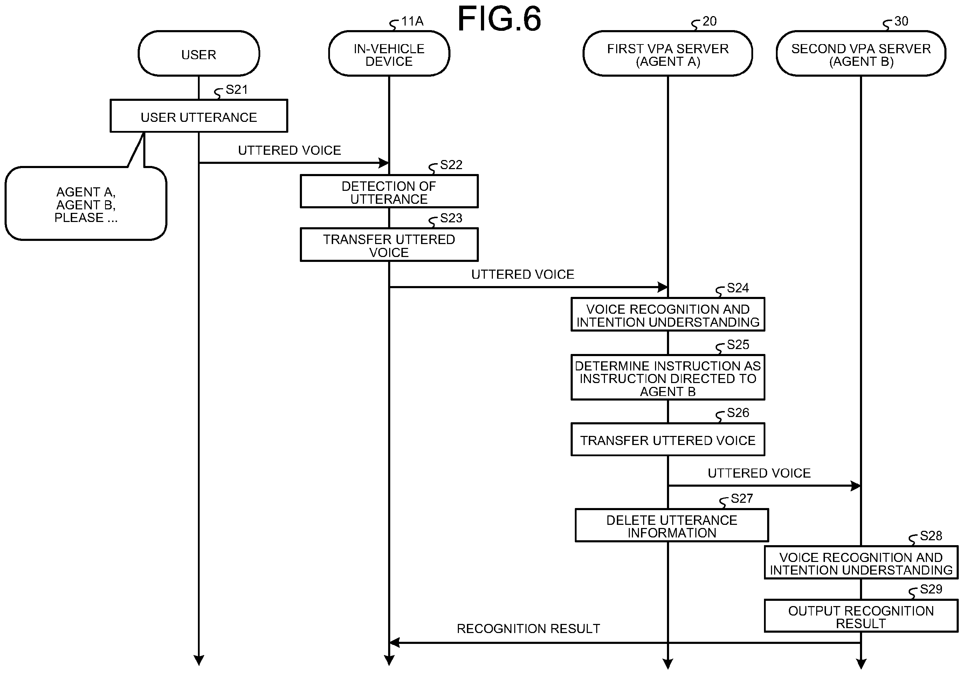

A second aspect of the processing procedure of the voice interaction method executed by the agent system 1A and the agent server according to the second embodiment will be described with reference to FIG. 6. The following describes a voice interaction method when a user calls another agent via a specific agent. For the sake of convenience, FIG. 6 illustrates the steps regarding user utterance in the flowchart of the voice interaction method.

First, when the user utters "Agent A, Agent B, please ..." (step S21), data of the uttered voice is input to the in-vehicle device 11A through the microphone 114. Subsequently, the control unit 111A of the in-vehicle device 11A detects the user's utterance (step S22), and transfers the user's uttered voice to the first VPA server 20, for example (step S23). Subsequently, the voice recognition unit 211 of the first VPA server 20 performs a voice recognition process and an intention understanding process (step S24).

The voice recognition unit 211 determines that the instruction is directed to the agent B (step S25), and transfers the user's uttered voice to the second VPA server 30 (step S26). Subsequently, the voice recognition unit 211 deletes the utterance information including the utterance content of the user and the recognition result from the storage unit 23 (step S27). Subsequently, the voice recognition unit 311 of the second VPA server 30 performs the voice recognition process and the intention understanding process (step S28), and outputs a result of the recognition to the in-vehicle device 11A (step S29).

When the user utters, in step S21, "Agent B, Agent A, please ...", the following process is performed. The control unit 111A detects the user's utterance in step S22, and transfers, in step S23, the user's uttered voice to the second VPA server 30, for example. Subsequently, the voice recognition unit 311 performs the voice recognition process and the intention understanding process in step S24. Subsequently, the voice recognition unit 311 determines that the instruction is directed to the agent A in step S25, and outputs the user's uttered voice to the first VPA server 20 in step S26. Subsequently, the voice recognition unit 311 deletes the utterance information including the utterance content of the user and the recognition result from the storage unit 23 in step S27. Subsequently, the voice recognition unit 211 performs the voice recognition process and the intention understanding process in step S28, and outputs the recognition result to the in-vehicle device 11A in step S29.

According to the above-described agent system 1A, the agent server, and the agent program of the second embodiment, the agent server side determines to which agent the user's instruction is directed and transfers the user's uttered voice to the VPA server based on a result of the determination. This makes it possible to accurately call an agent having a function desired by a user when using services of a plurality of agents having different functions, enabling the user to receive desired services.

For example, in the agent systems 1 and 1A, the terminal device, the agent server, and the agent program according to the embodiment, when the user instructs "play music", the VPA servers (the first VPA server 20 and the second VPA server 30) acquire music streaming data from the service server and transmit the data to the in-vehicle devices 11 and 11A. Alternatively, the VPA server may control the service server and cause the service server to directly transmit the music streaming data to the in-vehicle devices 11 and 11A.

According to the present disclosure, it is possible to accurately call a voice interaction agent having a function desired by a user in using services of a plurality of voice interaction agents having different functions.

Although the disclosure has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An agent system comprising:
a terminal device comprising a first processor comprising hardware, the first processor being configured to transfer user's uttered voice to a server configured to actualize a function of one voice interaction agent out of a plurality of the voice interaction agents; and
the server comprising a second processor comprising hardware, the second processor being configured to
recognize the user's uttered voice transferred from the terminal device, and
determine to which voice interaction agent out of the plurality of voice interaction agents an instruction included in the user's uttered voice is directed.

2. The agent system according to claim 1, wherein
the second processor is configured to output, to the terminal device, a result of determination when the second processor has determined that the instruction included in the user's uttered voice is an instruction directed to another voice interaction agent, and
the first processor is configured to
transfer the user's uttered voice to a server configured to actualize the function of the determined voice interaction agent, and
acquire a result of recognizing the user's uttered voice from the server that has transferred the user's uttered voice.

3. The agent system according to claim 1, wherein
the second processor is configured to transfer the user's uttered voice to a server configured to actualize the function of the determined voice interaction agent, and
the first processor is configured to acquire a result of recognizing the user's uttered voice, from the server to which the user's uttered voice has been transferred.

4. The agent system according to claim 1, wherein
the second processor is configured to transfer the user's uttered voice to a server configured to actualize the function of the determined voice interaction agent, and
the first processor is configured to acquire response data related to processing based on a result of recognizing the user's uttered voice, from the server to which the user's uttered voice has been transferred.

5. The agent system according to any one of claims 1 to 4, wherein, after recognizing the user's uttered voice transferred from the terminal device, the second processor is configured to delete the user's uttered voice and the result of the recognition stored in a storage unit.

6. The agent system according to claim 1 or claim 2, wherein
the terminal device includes a display, and
the first processor is configured to cause the display to display a name of the voice interaction agent determined by the server.

7. The agent system according to any one of claims 1 to 6, wherein the second processor is configured to:
convert the user's uttered voice into text data; and
in a case where the text data includes a phrase that specifies a voice interaction agent, determine that the user's uttered voice includes an instruction directed to the voice interaction agent.

8. The agent system according to any one of claims 1 to 7, wherein the user's uttered voice includes a phrase that specifies a voice interaction agent and an instruction directed to the voice interaction agent, preferably wherein the terminal device includes a button to be pressed by the user at the time of utterance.

9. The agent system according to any one of claims 1 to 8, wherein the terminal device is an in-vehicle device mounted on a vehicle or wherein the terminal device is an information terminal device carried by the user.

10. A server comprising a processor comprising hardware, the processor being configured to:
recognize user's uttered voice transferred from a terminal device; and
determine to which voice interaction agent out of a plurality of voice interaction agents an instruction included in the user's uttered voice is directed.

11. The server according to claim 10,
wherein the processor is configured to output, to the terminal device, a result of determination when the processor has determined that the instruction included in the user's uttered voice is an instruction directed to another voice interaction agent or wherein the processor is configured to transfer the user's uttered voice to a server configured to actualize the function of the determined voice interaction agent.

12. The server according to claim 10 or 11, wherein the processor is configured to:
convert the user's uttered voice into text data; and
in a case where the text data includes a phrase that specifies a voice interaction agent, determine that the user's uttered voice includes an instruction directed to the voice interaction agent,
and/or
wherein the user's uttered voice includes a phrase that specifies a voice interaction agent and an instruction directed to the voice interaction agent.

13. An agent program that causes a processor of a computer to execute:
recognizing user's uttered voice transferred from a terminal device; and
determining to which voice interaction agent out of a plurality of voice interaction agents an instruction included in the user's uttered voice is directed.

14. The agent program according to claim 17, the program causing the processor to execute outputting a result of determination to the terminal device in a case where the processor has determined that the instruction included in the user's uttered voice is an instruction directed to another voice interaction agent,
or
the program causing the processor to execute transferring the user's uttered voice to a server configured to actualize the function of the determined voice interaction agent.

15. The agent program according to claim 13 or 14, the program causing the processor to execute:
converting the user's uttered voice into text data, and
in a case where the text data includes a phrase that specifies a voice interaction agent, determining that the uttered voice includes an instruction directed to the voice interaction agent.
